# FASCICULE DE BREVET EUROPEEN

(11) **EP 3 427 334 B1**
(45) Date de publication et mention de la délivrance du brevet: **08.04.2020**
(21) Numéro de dépôt: 17707917.5
(22) Date de dépôt: 06.03.2017
(51) Int. Cl.: G08C 17/02, H01Q 1/32, H01Q 21/24, B60W 30/06

(54) **ÉQUIPEMENT ÉLECTRONIQUE D'AIDE AU STATIONNEMENT POUR VÉHICULE AUTOMOBILE**
ELEKTRONISCHE EINPARKHILFSVORRICHTUNG FÜR EIN KRAFTFAHRZEUG
ELECTRONIC PARKING ASSISTANCE DEVICE FOR A MOTOR VEHICLE

(30) Priorité: 07.03.2016 FR 1651896
(43) Date de publication de la demande: 16.01.2019
(73) Titulaire: Valeo Comfort and Driving Assistance, 94046 Créteil Cedex (FR)
(72) Inventeur: GOUMY, Jean-Claude, 94046 Creteil Cedex (FR); GEHIN, Frédéric, 94046 Creteil Cedex (FR)
(74) Mandataire: Delplanque, Arnaud
(86) Numéro de dépôt international: PCT/EP2017/055129
(87) Numéro de publication internationale: WO 2017/153307

(56) Documents cités:
- EP-A1- 2 295 281
- WO-A2-92/16392
- US-A1- 2014 222 252
- US-A1- 2015 097 738

## Description

### DOMAINE TECHNIQUE AUQUEL SE RAPPORTE L'INVENTION

La présente invention concerne de manière générale l'amélioration de la qualité des communications sans fil entre un véhicule automobile et un terminal mobile (typiquement un téléphone mobile).

Elle concerne plus particulièrement un équipement électronique d'aide au stationnement pour véhicule automobile. Elle concerne également un véhicule automobile équipé d'un tel équipement.

L'invention concerne aussi un procédé de communication d'un équipement électronique avec un terminal mobile.

Elle trouve une application particulièrement avantageuse dans la commande du stationnement automatique d'un véhicule automobile au moyen d'un terminal mobile tenu par un utilisateur situé à l'extérieur du véhicule.

### ARRIERE-PLAN TECHNOLOGIQUE

Le stationnement d'un véhicule automobile est souvent source de problème et d'anxiété pour le conducteur.

C'est la raison pour laquelle on été développés des systèmes d'aide au stationnement, permettant par exemple d'émettre un signal sonore lorsque l'arrière du véhicule se rapproche d'un obstacle ou d'afficher sur un écran présent dans l'habitacle les images filmées en temps réel par une caméra située à l'arrière du véhicule.

Le document US 2014/222252 A1 décrit un équipement électronique d'aide au stationnement pour véhicule selon l'art antérieur.

Pour faciliter encore le stationnement du véhicule, il a été récemment développé des systèmes permettant au véhicule de se garer de manière autonome, c'est-à-dire automatiquement, sans l'intervention du conducteur. Ces systèmes autonomes fonctionnement notamment grâce à des caméras situées de chaque côté du véhicule et qui informent le véhicule de la position de la place de stationnement et de la présence éventuelle d'obstacles.

Dans le cas où la place de stationnement est si petite qu'une fois le véhicule garé, le conducteur ne pourra plus ouvrir les portières, il est prévu que le conducteur puisse se trouver hors de l'habitacle pendant que le véhicule se stationne.

Ces systèmes de stationnement automatique n'étant pas infaillibles, et parce que le conducteur reste responsable légalement de la manœuvre, une solution a été développée pour permettre à l'usager d'interrompre la manœuvre depuis son smartphone s'il perçoit un danger.

Cette solution consiste à demander à l'usager d'exercer sur l'écran tactile de son smartphone une pression pour autoriser le véhicule à se garer, si bien qu'il peut interrompre cette opération de stationnement en relâchant simplement la pression qu'il exerce sur l'écran tactile de son smartphone.

Pour la commande de cette fonction, le véhicule embarque généralement une antenne lui permettant de communiquer avec le terminal mobile.

Pour des raisons de coûts, cette antenne est généralement placée sur la carte électronique elle-même du calculateur central du véhicule. Toutefois, pour assurer une meilleure communication entre le véhicule et le terminal mobile, il est connu de placer cette antenne ailleurs, par exemple dans la console centrale intérieure du véhicule ou dans les appuis-tête.

On constate malheureusement que même placée ainsi, l'antenne ne permet pas toujours d'assurer une qualité de communication suffisante, si bien qu'il arrive que l'opération de stationnement s'interrompe inopportunément lorsque le véhicule ne reçoit plus de signal provenant du smartphone de l'utilisateur.

La première raison expliquant ce problème est qu'une antenne présente un diagramme de rayonnement non isotrope. Autrement formulé, la puissance émise par l'antenne n'est pas la même dans toutes les directions de l'espace. De la même manière, la puissance reçue par l'antenne varie selon la direction d'où provient le signal. Aussi, à titre d'exemple, la puissance électromagnétique mesurée ne sera pas la même selon que le porteur du terminal mobile se trouve à 10 mètres devant le véhicule ou à 10 mètres derrière le véhicule.

La seconde raison est que le signal est sujet à de fortes variations du fait de l'environnement dans lequel l'antenne se trouve, variations qu'il n'est pas possible de prévoir ou d'évaluer. Ainsi, lorsque l'antenne est située dans l'habitacle du véhicule, le signal se réfléchit plusieurs fois avant d'être reçu par l'antenne. Le signal s'attenue par ailleurs à la traversée des différents obstacles qu'il rencontre, notamment à la traversée des vitres qui sont de plus en plus opaques pour les signaux électromagnétiques.

Par conséquent, il arrive que la qualité du signal échangé se dégrade très fortement lorsque le véhicule se déplace par rapport à l'utilisateur.

### OBJET DE L'INVENTION

Afin de remédier aux inconvénients précités de l'état de la technique, la présente invention propose de combiner les caméras d'aide au stationnement et les antennes, de manière à assurer une bonne réception des signaux émis par le terminal mobile, quelle que soit la position de l'utilisateur par rapport au véhicule.

Plus particulièrement, on propose selon l'invention un équipement électronique d'aide au stationnement à implanter dans un véhicule automobile, comportant :
- un boîtier qui porte deux antennes distinctes,
- une caméra qui est logée au moins en partie dans le boîtier, et
- une unité de commande qui est logée dans le boîtier, qui est connectée aux antennes, et qui est adaptée à sélectionner chaque antenne et à émettre et recevoir des signaux via exclusivement l'antenne sélectionnée.

L'invention présente de multiples avantages.

Tout d'abord l'agencement des antennes sur le boîtier extérieur de la caméra permet de réduire le coût de fabrication de l'ensemble puisqu'il n'est plus nécessaire de prévoir, d'un côté, une caméra équipée de son propre boîtier, et, de l'autre, une antenne équipée de son propre support.

Cet agencement facilite par ailleurs la connexion de l'unité de commande au réseau de communication du véhicule, puisqu'on profite pour cela de la connexion déjà prévue entre la caméra et le réseau de communication.

Le boîtier de la caméra se trouve en outre être bien adapté pour supporter les antennes en ce sens qu'il présente une taille suffisante pour que la taille de l'antenne permette à cette dernière de capter des signaux dans les fréquences souhaitées (typiquement à 2,4 GHz).

L'utilisation de deux antennes, orientées différemment, permet bien entendu d'optimiser le diagramme de rayonnement de l'ensemble. Le fait de permettre à l'unité de commande d'échanger des signaux via l'une seulement ou l'autre des antennes permet alors de maximiser la puissance émise sur chaque antenne (par rapport au cas où l'unité de commande échangerait des signaux simultanément au travers des deux antennes). Par conséquent, la portée du dispositif s'en trouve sensiblement accrue.

On notera par ailleurs que le boîtier de la caméra est généralement situé à l'extérieur de l'habitacle du véhicule, ce qui permet de placer les antennes à l'extérieur de l'habitacle. De cette manière, les signaux reçus par les antennes sont moins amortis que si l'antenne était située dans l'habitacle. Cet agencement assure ainsi une meilleure qualité de communication entre le terminal mobile et le véhicule.

Enfin, pour permettre le stationnement automatique du véhicule, on utilise généralement quatre caméras respectivement situées à l'avant, à l'arrière et sur les côtés du véhicule. En utilisant alors quatre équipements électroniques conformes à l'invention, il est ainsi possible de multiplier le nombre d'antennes et donc de garantir une excellente communication entre le véhicule automobile et le terminal mobile, quelle que soit leur position relative.

D'autres caractéristiques avantageuses et non limitatives de l'équipement électronique conforme à l'invention sont les suivantes :
- le boîtier porte une troisième antenne qui est connectée à l'unité de commande de telle manière que l'unité de commande peut la sélectionner pour émettre et recevoir des signaux ;
- le boîtier présente plusieurs faces orthogonales deux à deux et les antennes sont respectivement situées sur lesdites faces orthogonales ;
- il est prévu des moyens de connexion filaire de la caméra à un premier réseau de communication et de ladite unité de commande à un second réseau de communication, confondu ou distinct du premier réseau de communication ; et
- chaque antenne se présente sous la forme d'un brin rayonnant rectiligne.

L'invention concerne aussi un véhicule automobile comportant deux rétroviseurs extérieurs, un calculateur central, deux équipements électroniques tels que précités, respectivement logés dans les deux rétroviseurs extérieurs, et un réseau de communication qui connecte entre eux le calculateur central et les unités de commande des deux équipements électroniques.

Avantageusement, chaque rétroviseur extérieur comporte, outre l'équipement électronique, un miroir ou une rétro-caméra permettant d'acquérir des images de l'arrière du véhicule automobile.

Préférentiellement, le véhicule automobile comporte au moins un autre équipement électronique situé à l'avant ou à l'arrière du véhicule.

L'invention concerne également un procédé de communication d'un équipement électronique tel que précité avec un terminal mobile, comportant deux phases distinctes dont :
- une phase d'attente au cours de laquelle l'unité de commande de l'équipement électronique émet des requêtes de tentative d'association successives via alternativement chacune de ses antennes, qui est suivie par, dès qu'un signal de réponse est reçu par l'une première de ses antennes,
- une phase de communication au cours de laquelle l'unité de commande communique avec le terminal mobile en utilisant, au moins initialement, exclusivement ladite première antenne.

De manière préférentielle, au cours de la phase de communication :
- l'unité de commande émet des requêtes de contrôle successives via chacune de ses antennes autre que la première antenne, puis, lorsqu'un signal de réplique est reçu par l'une seconde de ses antennes,
- l'unité de commande détermine le gain du signal de réponse instantané reçu du terminal mobile via ladite première antenne,
- l'unité de commande compare le gain du signal de réponse instantané et le gain du signal de réplique, puis
- l'unité de commande poursuit la communication avec le terminal mobile via ladite seconde antenne uniquement si le gain du signal de réplique est sensiblement supérieur au gain du signal de réponse instantané.

Avantageusement, lorsque le véhicule comporte plusieurs équipements électroniques tels que précités et alors qu'en phase de communication, l'unité de commande d'un premier des équipements électroniques communique avec le terminal mobile via une première de ses antennes :
- l'unité de commande de chaque équipement électronique émet des requêtes de contrôle successives via chacune de ses antennes autre que la première antenne, puis, lorsqu'un signal de réplique est reçu par l'une seconde des antennes du second équipement électronique,
- l'unité de commande du premier équipement électronique détermine le gain du signal de réponse instantané reçu du terminal mobile via ladite première antenne,
- l'unité de commande de l'un au moins des équipements électroniques compare le gain du signal de réponse instantané et le gain du signal de réplique, puis
- l'unité de commande du second équipement électronique poursuit la communication avec le terminal mobile via ladite seconde antenne uniquement si le gain du signal de réplique est sensiblement supérieur au gain du signal de réponse instantané.

Avantageusement, au cours de la phase de communication, il est prévu une étape d'estimation de la position du terminal mobile, en fonction de quelle antenne est utilisée et en fonction au moins du gain du signal de réponse instantané.

L'invention concerne enfin un procédé de contrôle interactif du stationnement automatique d'un véhicule automobile dans une place de stationnement au moyen d'un terminal mobile, ledit véhicule automobile comportant des moyens de commande de l'orientation des roues du véhicule automobile, des moyens de contrôle d'un groupe motopropulseur du véhicule automobile, au moins un moyen d'aide à la détection d'obstacles, et un calculateur central qui est adapté à piloter lesdits moyens de commande et de contrôle en fonction de données reçues du moyen d'aide à la détection d'obstacles, le procédé comportant des étapes de :
- mise en communication du terminal mobile avec le véhicule automobile au moyen d'un procédé de communication tel que précité,
- sélection par l'utilisateur sur le terminal mobile d'un mode de stationnement automatique du véhicule automobile, et de
- stationnement automatique du véhicule automobile, au cours de laquelle le calculateur pilote lesdits moyens de commande et de contrôle en fonction de données reçues du moyen d'aide à la détection d'obstacles.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un véhicule automobile et d'un terminal mobile tenu par le conducteur du véhicule automobile,
- la figure 2 représente schématiquement des composants, utiles à la compréhension de l'invention, du véhicule automobile et du terminal mobile de la figure 1,
- la figure 3 est une vue schématique en perspective d'un équipement électronique conforme à l'invention,
- les figures 4A, 4B et 4C sont respectivement des vues schématiques de dessus, de côté et de face du véhicule automobile de la figure 1.

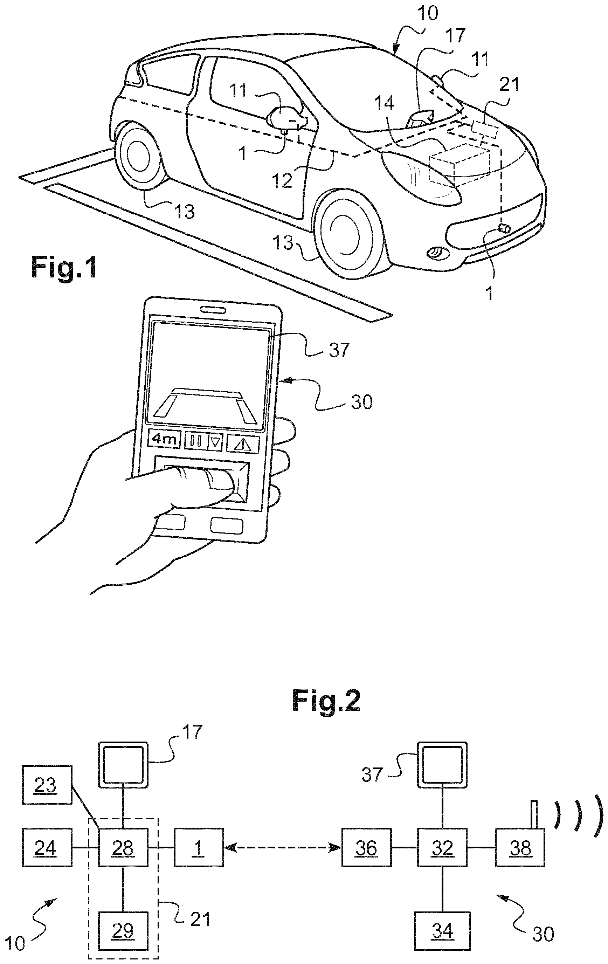

Sur la figure 1, on a représenté un véhicule automobile 10, ici une voiture comportant quatre roues 13, dont deux roues avant directrices.

En variante, il pourrait s'agir d'un véhicule automobile comprenant trois roues, ou davantage de roues.

Classiquement, ce véhicule automobile 10 comporte un châssis qui supporte notamment un groupe motopropulseur 14 (à savoir un moteur et des moyens de transmission du couple du moteur aux roues motrices), un système de direction pour faire varier l'angle d'orientation des deux roues avant directrices, des éléments de carrosserie et des éléments d'habitacle.

Sur la figure 1, on observe également la main d'un utilisateur (ici le conducteur du véhicule automobile 10) tenant un terminal mobile 30.

Ce terminal mobile 30 est ici un téléphone portable intelligent (ou « smartphone »).

En variante, il pourrait s'agir d'un autre type de terminal mobile, par exemple d'une télécommande dédiée au contrôle du stationnement du véhicule automobile 10 ou d'une télécommande dédiée au pilotage de différentes fonctions du véhicule automobile (verrouillage et déverrouillage des portières, démarrage du moteur, contrôle du stationnement du véhicule automobile 10, ...). Il pourrait aussi s'agir d'une montre connectée, d'une paire de lunettes connectée, ou d'une tablette informatique.

Ici, et c'est d'ailleurs précisément l'objet de la présente invention, le terminal mobile 30 est prévu pour communiquer avec le véhicule automobile 10, notamment pour permettre au conducteur du véhicule automobile 10 de surveiller, depuis l'extérieur du véhicule, que le véhicule automobile 10 se gare automatiquement et sans problème dans une place de stationnement, grâce à ce terminal mobile 30.

Dans le contexte de la présente invention, le véhicule automobile 10 comprend une unité électronique de commande (ou ECU pour "Electronic Control Unit"), appelée ici calculateur central 21, qui peut entrer en communication via une liaison sans fil avec le terminal mobile 30 afin d'échanger des données avec ce terminal mobile 30.

Ici, la liaison sans fil utilisée pour communiquer entre le calculateur 21 et le terminal mobile 30 est par exemple de type BLE (de l'acronyme anglais « Bluetooth Low Energy »). En variante, il pourrait s'agir d'un autre type de connexion, par exemple Wifi ou Bluetooth.

La figure 2 représente schématiquement des composants, utiles à la compréhension de l'invention, du véhicule automobile 10 et du terminal mobile 30.

Sur cette figure 2, on observe que le véhicule automobile 10 comprend, outre le calculateur central 21 déjà mentionné, des moyens de commande 23 du système de direction, des moyens de contrôle 24 du groupe motopropulseur 14, un écran tactile 17 situé dans l'habitacle, et au moins un équipement électronique 1 qui sera décrit plus en détail dans la suite de cet exposé.

Les moyens de commande 23 permettent de faire varier l'orientation des roues 13 directrices, sans intervention du conducteur sur le volant du véhicule automobile.

Les moyens de contrôle 24 du groupe motopropulseur 14 sont adaptés à contrôler notamment le régime du moteur et le rapport de vitesses engagé, sans intervention du conducteur.

Ces différents composants sont connectés au calculateur central 21, par exemple par un réseau de communication 12, ici de type BUS-CAN.

Le calculateur central 21 comprend un processeur 28 et une unité de mémorisation 29 (voir figure 2), par exemple une mémoire non-volatile réinscriptible ou un disque dur.

L'unité de mémorisation 29 mémorise des données utilisées dans le cadre du procédé décrit ci-dessous, notamment une valeur seuil. Elle mémorise également une application informatique, constituée de programmes d'ordinateur comprenant des instructions dont l'exécution par le processeur 28 permet la mise en œuvre par le calculateur 21 du procédé décrit ci-après.

Le calculateur 21 est également adapté à piloter les moyens de commande 23 pour contrôler la direction du véhicule, et les moyens de contrôle 24 pour contrôler la vitesse du véhicule, sans intervention du conducteur, afin de garer automatiquement le véhicule automobile.

Comme le montre la figure 2, le terminal mobile 30 comprend quant à lui un processeur 32, une mémoire 34 (par exemple une mémoire non-volatile réinscriptible), un module de communication sans fil 36, un module 38 de communication sur le réseau de téléphonie mobile, et une interface utilisateur (ici un écran tactile 37, mais il pourrait s'agir d'un écran couplé à un clavier).

La mémoire 34 permet notamment au terminal mobile 30 de mémoriser une application utilisateur, destinée à faciliter la commande de fonctionnalités du véhicule automobile 10 au moyen de ce terminal mobile 30.

Le module de communication sans fil 36 du terminal mobile 30 permet d'établir une liaison sans fil (ici de type BLE comme déjà indiqué) avec le véhicule automobile 10, grâce à chaque équipement électronique 1 équipant ce véhicule automobile 10.

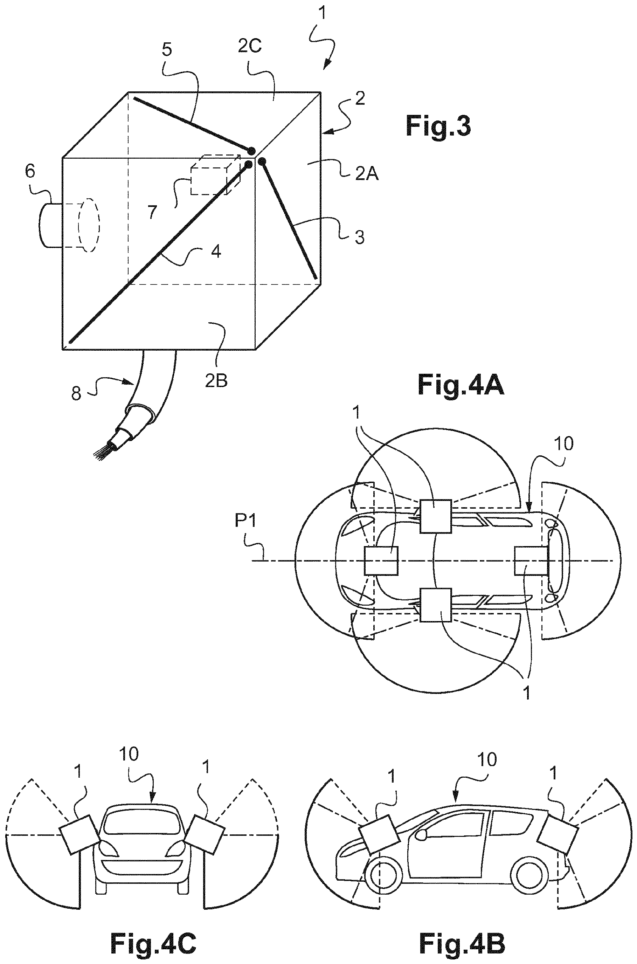

Sur la figure 3, on a représenté un tel équipement électronique 1.

Cet équipement électronique 1 cumule deux fonctions essentielles pour permettre le stationnement du véhicule de manière autonome.

Sa première fonction est d'acquérir des images qui, une fois traitées, permettront au calculateur central 21 de déterminer la position de la place de stationnement et la position d'éventuels obstacles.

Sa seconde fonction est de permettre au calculateur central 21 de communiquer avec le processeur 32 du terminal mobile 30, en assurant une bonne qualité de communication et surtout une continuité de la communication pendant toute la durée de l'opération de stationnement.

Ici, il est prévu que le véhicule automobile 10 comporte au moins deux équipements électroniques 1 respectivement logés dans ses deux rétroviseurs extérieurs 11. On précisera à ce sujet qu'un tel rétroviseur pourra, classiquement, comporter un miroir permettant au conducteur de voir l'environnement arrière du véhicule sans avoir à tourner la tête exagérément. En variante ou en complément, ce rétroviseur pourra comporter une rétro-caméra, c'est-à-dire une caméra filmant l'environnement arrière du véhicule, de manière que cet environnement puisse être affiché sur un écran 17 situé dans l'habitacle du véhicule.

Comme le montrent schématiquement les figures 4A, 4B, et 4C, il est plus précisément prévu que le véhicule automobile 1 comporte quatre équipements électroniques 1, dont deux sont logés dans les deux rétroviseurs extérieurs 11 et dont les deux autres sont situés à l'avant et à l'arrière du véhicule.

Ces quatre équipements électroniques 1 sont de préférence situés à l'extérieur de l'habitacle du véhicule. Ils sont même avantageusement situés à l'extérieur de la carrosserie métallique du véhicule automobile 10, afin d'assurer une bonne qualité de communication.

Ainsi, les équipements électroniques 1 situés à l'avant et à l'arrière du véhicule sont de préférence situés dans les boucliers avant et arrière du véhicule, par exemple à proximité des plaques d'immatriculation.

Le réseau de communication 12 du véhicule automobile 10 passe donc par ces différentes positions, de manière que les équipements électroniques 1 puissent tous y être connectés facilement.

Comme le montre bien la figure 3, chaque équipement électronique 1 comporte un boîtier 2, de préférence de forme parallélépipédique.

Ce boîtier 2 présente ici une forme cubique. Il est réalisé dans un matériau non-métallique, par exemple dans un matériau plastique.

Il comporte des moyens de fixation (non représentés) au véhicule automobile.

Le boîtier 2 porte au moins deux antennes. Dans le mode de réalisation représenté, il porte même trois antennes 3, 4, 5 respectivement situées sur trois de ses faces 2A, 2B, 2C orthogonales deux à deux.

Chaque antenne 3, 4, 5 se présente sous la forme d'un brin rayonnant rectiligne. Ces trois antennes s'étendent en longueur dans des directions orthogonales.

Pour permettre à ces antennes de rayonner dans la bande de fréquence souhaitée (2,4GHz) alors que le boîtier 2 présente une taille réduite (comprise entre 2 et 4 centimètres de côté), chaque antenne s'étend en longueur selon une diagonale de la face du boîtier sur laquelle elle se trouve.

Le boîtier 2 loge intérieurement, d'une part, une caméra 6, et, d'autre part, une unité de commande 7 électronique.

La caméra 6 est classiquement prévue pour acquérir des images de l'environnement immédiat du véhicule. Elle comporte à cet effet un objectif très grand angle (du type « fish-eye ») qui fait saillie hors du boîtier 2.

L'unité de commande 7 comporte quant à elle un microcontrôleur permettant d'exécuter des instructions simples en vue uniquement d'établir une communication entre le véhicule automobile 10 et le terminal mobile 30.

Elle est connectée à chacune des trois antennes 3, 4, 5 par une liaison électrique distincte. Elle est en outre conçue pour pouvoir émettre et recevoir des signaux via chacune de ces antennes, non pas de manière simultanée, mais plutôt de manière séquentielle, comme cela sera bien expliqué dans la suite de cet exposé. De cette manière, la puissance du signal émis ou reçue est à chaque fois maximum (elle n'est pas divisée par le nombre d'antennes utilisées).

L'équipement électronique 1 comporte par ailleurs des moyens de connexion filaire 8, permettant ici de connecter la caméra 6 et l'unité de commande 7 au réseau de communication 12.

De cette manière, l'unité de commande 7 est adaptée à communiquer non seulement avec le calculateur central 21, mais également avec les unités de commande 7 des autres équipements électroniques 1.

On peut maintenant décrire, en référence aux figures 4A à 4C, l'orientation des équipements électroniques 1 dans le véhicule automobile 10.

Sur ces figures, on a représenté en traits mixtes le cône d'ouverture du champ de vision de chaque caméra 6, et, en trait interrompus, le cône d'émission et de réception de signaux des antennes 3, 4, 5 de chaque boîtier 2.

On observe sur les figures que les deux équipements électroniques 1 situés dans les rétroviseurs extérieurs 1 sont strictement identiques et sont placés de manière symétrique par rapport au plan médian P1 du véhicule automobile 10.

Ils sont orientés de telle manière que l'axe optique de la caméra 6 et la direction de rayonnement maximal des antennes 3, 4, 5 de chacun de ces deux équipements électroniques 1 sont situés dans un plan orthogonal au plan médian P1 et sont inclinés vers le bas. Cet axe et cette direction sont ici inclinés l'un par rapport à l'autre en ce sens que l'axe optique de la caméra 6 est plus orienté vers le bas que la direction de rayonnement maximal des antennes 3, 4, 5.

Les deux équipements électroniques 1 situés à l'avant et à l'arrière du véhicule automobile sont strictement identiques.

Ils sont orientés de telle manière que la direction de rayonnement maximal des antennes 3, 4, 5 s'étend selon l'axe optique de la caméra 6, dans le plan médian P1. Ici encore, cet axe optique est incliné vers le bas.

En résumé, la position de la caméra 6 par rapport aux antennes du boîtier 2 n'est pas la même dans les équipements électroniques 1 situés dans les rétroviseurs extérieurs 11 que dans les équipements électroniques 1 situés à l'avant et à l'arrière du véhicule. L'objectif est de permettre aux caméras d'acquérir des images de l'environnement immédiat du véhicule et aux antennes de capter des signaux pouvant provenir d'autres directions.

Comme cela a été expliqué supra, l'intérêt des équipements électroniques 1 est de permettre au conducteur d'utiliser son terminal mobile 30 pour contrôler les opérations de stationnement automatique du véhicule automobile 10, depuis l'extérieur de ce dernier.

On peut alors maintenant décrire en détail ces opérations.

On considérera ici le cas où le conducteur, après avoir arrêté son véhicule automobile 10 à proximité d'une place de stationnement par exemple délimitée par des marquages au sol, sort du véhicule et souhaite que le véhicule automobile 10 se gare automatiquement sur cette place de stationnement, sans intervention humaine directe sur l'orientation des roues directrices.

Dans ce cas, le conducteur devra toutefois veiller à ce que le véhicule automobile 10 se gare à l'endroit souhaité, sans danger et sans heurt. C'est pour faciliter ces opérations de surveillance que le procédé suivant est mis en œuvre.

Le procédé débute avant que le conducteur sélectionne sur son terminal mobile 30 un mode de stationnement automatique du véhicule automobile 10 ou au moment où ce mode est sélectionné.

La première opération consiste pour le calculateur central 21 du véhicule automobile à s'appairer avec le terminal mobile 30, via la liaison sans fil de type BLE.

Cette opération se déroule en deux phases distinctes, dont une phase d'attente au cours de laquelle le véhicule automobile va vérifier si un terminal mobile est à portée de ses équipements électroniques 1, et une phase de communication au cours de laquelle le terminal mobile 30 va pouvoir échanger des données avec le véhicule automobile 10.

Au cours de la phase d'attente, l'unité de commande 7 de chaque équipement électronique 1 émet des requêtes successives via alternativement chacune de ses antennes 3, 4, 5, pour tenter d'établir une connexion avec un terminal mobile situé à portée de l'une de ses antennes 3, 4, 5. Le signal émis par chaque antenne est ici appelé signal de tentative d'association S1.

Ce signal de tentative d'association S1 est donc émis à intervalles réguliers alternativement par la première antenne 3, puis par la seconde antenne 4, puis par la troisième antenne 5 de chaque équipement électronique 1.

Lorsqu'il capte un signal de tentative d'association S1, le terminal mobile 30 est programmé pour émettre en réponse un autre signal, appelé dans la suite signal de réponse S2. Cet échange de signaux est standard si on se réfère à la norme BLE.

Puisque ce signal de réponse S2 est émis dès réception par le terminal mobile 30 du signal de tentative d'association S1, il est reçu par la même antenne de l'équipement électronique 1 que celle qui avait émis le signal de tentative d'association S1 capté par le terminal mobile 30. Dans l'exemple ici décrit, on pourra considérer qu'il s'agit de la première antenne 3 d'un premier des équipements électroniques 1.

A ce stade, on notera que le contenu des signaux échangés ne faisant pas l'objet de la présente invention, il ne sera pas ici décrit en détail. On pourra simplement préciser que les premiers signaux échangés comporteront des défis cryptologiques, permettant au véhicule automobile 10 de s'assurer que le terminal mobile 30 est autorisé à s'appairer avec lui.

Une fois le terminal mobile 30 appairé, l'unité de commande 7 du premier équipement électronique 1 va pouvoir établir une communication suivie avec le terminal mobile 30 afin d'échanger des données permettant de contrôler le stationnement automatique du véhicule, via exclusivement sa première antenne 3.

Il pourra alors arriver, par exemple parce que le conducteur se déplace autour du véhicule automobile 10 ou parce qu'il déplace son terminal mobile 30 ou parce que le véhicule automobile 10 se déplace par rapport au conducteur, que la qualité des signaux échangés via cette première antenne 3 se dégrade.

De manière à ce que l'antenne utilisée par le véhicule automobile 10 pour échanger des données avec le terminal mobile 30 soit toujours celle la plus susceptible d'assurer une bonne qualité de communication, pendant toute la phase de communication, l'unité de commande 7 du premier équipement électronique 1 met en œuvre les étapes suivantes.

Au cours d'une première étape, alors que des données sont échangées via la première antenne 3, l'unité de commande 7 continue d'émettre des requêtes successives, appelées ici signaux de contrôle S3, en utilisant à tour de rôle la seconde et la troisième antennes 4, 5.

A chaque fois que le terminal mobile 30 captera un tel signal de contrôle S3, il sera programmé pour renvoyer un signal en réponse, appelé ici signal de réplique S4. Puisque ce signal de réplique S4 est émis dès réception par le terminal mobile du signal de contrôle S3, il est reçu par la même antenne de l'équipement électronique 1 que celle qui avait émis le signal de contrôle S3 capté par le terminal mobile 30. Dans l'exemple ici décrit, on pourra considérer qu'il s'agit de la seconde antenne 4 du premier équipement électronique 1.

Lorsqu'elle reçoit ce signal de réplique S4, l'unité de commande 7 met en œuvre une seconde étape.

Au cours de cette seconde étape, l'unité de commande 7 détermine le gain du signal de réplique S4. Elle détermine parallèlement le gain du signal qui est échangé à cet instant via la première antenne 3 avec le terminal mobile 30 (appelé ci-après signal de réponse instantané S2').

Les gains de ces deux signaux S2', S4 sont alors comparés.

Puis, si le gain du signal de réplique S4 est sensiblement supérieur à celui du signal de réponse instantané S2', ce qui signifie que la seconde antenne 4 est mieux positionnée par rapport au terminal mobile 30 que la première antenne 3 pour capter les signaux émis par ce terminal mobile, l'unité de commande 7 poursuit la communication avec le terminal mobile 30 en utilisant non plus la première antenne 3, mais la seconde antenne 4. Dans le cas contraire, il poursuit la communication avec le terminal mobile 30 via la première antenne 3.

Par « sensiblement supérieur », on entend que le gain du signal de réplique S4 ne doit pas être tout juste supérieur à celui du signal de réponse instantané S2', pour éviter que le signal ne bascule trop souvent entre les antennes. Il doit être supérieur à la somme du gain du signal de réponse instantané S2' et d'une valeur seuil prédéterminée. Cette valeur seuil est au moins égale à 1 dB, par exemple égale à 10 dB.

Par conséquent, tant que les gains des signaux reçus des seconde et troisième antennes 4, 5 ne sont pas supérieurs de, par exemple, plus de 10dB au gain du signal reçu de la première antenne 3, la communication entre le véhicule automobile 10 et le terminal mobile 30 se poursuit via la première antenne 3.

A ce stade, on comprend que lorsqu'une antenne de l'un premier des équipements électroniques 1 a commencé à communiquer avec le terminal mobile 30, l'unité de commande 7 de ce premier équipement électronique 1 va contrôler en continu si l'une de ses autres antennes ne serait pas plus susceptible d'assurer une connexion de qualité entre le véhicule automobile 10 et le terminal mobile 30.

Mais il peut arriver que les antennes de ce premier équipement électronique 1 ne soient plus celles les mieux placées pour communiquer avec le terminal mobile 30. Il peut ainsi arriver qu'un autre équipement électronique 1 soit mieux placé pour communiquer.

Il est donc prévu de contrôler en continu si l'une des antennes de l'un des autres équipements électroniques ne serait pas plus susceptible d'assurer une meilleure connexion entre le véhicule automobile 10 et le terminal mobile 30.

Pour cela, on tire partie du fait que les unités de commande 7 des différents équipements électroniques 1 du véhicule automobile 10 sont en mesure de communiquer entre elles, via le réseau de communication 12.

Ces opérations de contrôle pourront alors être mises en œuvre de la manière suivante.

Lors de la phase de communication, l'unité de commande 7 de chacun des équipements électroniques 1 autre que le premier équipement électronique 1 émet régulièrement des signaux de contrôle S3 successifs via chacune de ses antennes 3, 4, 5.

Puis, lorsqu'un signal de réplique S4 est reçu par l'une des antennes d'un second équipement électronique 1, l'une des unités de commande 7 (ou le calculateur central 21) compare le gain du signal de réponse instantané S2' (celui reçu via la première antenne 3 du premier équipement électronique 1) avec le gain de ce signal de réplique S4.

Alors, l'unité de commande 7 du second équipement électronique 1 sera sélectionnée pour poursuivre la communication avec le terminal mobile 30 uniquement si le gain du signal de réplique S4 est sensiblement supérieur au gain du signal de réponse instantané S2' (ici de plus de 10dB).

Ces opérations permettent donc d'assurer une continuité de la communication entre le véhicule automobile 10 et le terminal mobile 30.

Alors, puisque la communication entre le véhicule automobile 10 et le terminal mobile 30 est bien établie, le stationnement automatique du véhicule automobile 10 peut se faire de la manière suivante.

Grâce aux informations reçues des caméras 6 des différents équipements électroniques 1, le calculateur 21 peut déterminer la position de la place de stationnement et la position d'éventuels obstacles.

Il pilote alors, en fonction de ces positions, les moyens de commande 23 et de contrôle 24 de manière que le véhicule se gare de manière autonome dans sa place de stationnement. Cette opération de pilotage des moyens de commande 23 et de contrôle 24 étant connue de l'homme du métier et ne faisant pas en propre l'objet de la présente invention, elle ne sera pas ici décrite plus en détail.

On notera seulement que grâce à la continuité de la communication établie entre le véhicule automobile 10 et le terminal mobile 30, le conducteur pourra commander instantanément l'interruption de ces opérations de stationnement, par exemple en relâchant simplement la pression qu'il exerce avec son doigt sur l'écran tactile 37 de son terminal mobile 30.

Une fois l'opération de stationnement achevée, la connexion entre le terminal mobile 30 et le véhicule automobile 10 peut s'interrompre.

En particulier, on pourra prévoir qu'au cours de la phase de communication, le calculateur central mesure les gains des signaux reçus par chacune des antennes des quatre équipements électroniques, et qu'il en déduise par triangulation une estimation de la position du terminal mobile par rapport au véhicule automobile. Cette position pourra par exemple être exploitée par le calculateur central afin d'avertir le conducteur de se déplacer s'il se trouve sur la trajectoire du véhicule.

## Revendications

1. Equipement électronique (1) d'aide au stationnement pour véhicule automobile (10), comportant :
- un boîtier (2) qui porte une antenne (3),
- une caméra (6) qui est logée au moins en partie dans le boîtier (2), et
- une unité de commande (7) qui est logée dans le boîtier (2) et qui est connectée à ladite antenne (3),
**caractérisé en ce que** le boîtier (2) porte au moins une autre antenne (4) qui est connectée à l'unité de commande (7), et
**en ce que** l'unité de commande (7) est adaptée à sélectionner chaque antenne (3, 4) et à émettre et recevoir des signaux (S1, S2) via exclusivement l'antenne sélectionnée.

2. Equipement électronique (1) selon la revendication précédente, dans lequel le boîtier (2) porte une troisième antenne (5) qui est connectée à l'unité de commande (7) de telle manière que l'unité de commande (7) peut la sélectionner pour émettre et recevoir des signaux (S1, S2).

3. Equipement électronique (1) selon l'une des revendications précédentes, dans lequel le boîtier (2) présente plusieurs faces orthogonales (2A, 2B, 2C) deux à deux et dans lequel les antennes (3, 4, 5) sont respectivement situées sur lesdites faces orthogonales (2A, 2B, 2C).

4. Equipement électronique (1) selon l'une des revendications précédentes, dans lequel il est prévu des moyens de connexion filaire (8) de la caméra (6) à un premier réseau de communication et de ladite unité de commande (7) à un second réseau de communication, confondu ou distinct du premier réseau de communication.

5. Equipement électronique (1) selon l'une des revendications précédentes, dans lequel chaque antenne (3, 4, 5) se présente sous la forme d'un brin rayonnant rectiligne.

6. Véhicule automobile (10) comportant deux rétroviseurs extérieurs (11) et un calculateur central (21), **caractérisé en ce qu'**il comporte en outre deux équipements électroniques (1) conformes à l'une des revendications précédentes, respectivement logés dans les deux rétroviseurs extérieurs (11), et un réseau de communication (12) qui connecte entre eux le calculateur central (21) et les unités de commande (7) des deux équipements électroniques (1).

7. Véhicule automobile (10) selon la revendication précédente, dans lequel chaque rétroviseur extérieur (11) comporte, outre l'équipement électronique (1), un miroir ou une rétro-caméra permettant d'acquérir des images de l'arrière du véhicule automobile (10).

8. Véhicule automobile (10) selon l'une des deux revendications précédentes, comportant au moins un autre équipement électronique (1) conforme à l'une des revendications 1 à 5, situé à l'avant ou à l'arrière du véhicule.

9. Procédé de communication d'un équipement électronique (1) conforme à l'une des revendications 1 à 5 avec un terminal mobile (30), comportant deux phases distinctes dont :
- une phase d'attente au cours de laquelle l'unité de commande (7) de l'équipement électronique (1) émet des requêtes de tentative d'association (S1) successives via alternativement chacune de ses antennes (3, 4, 5), qui est suivie par, dès qu'un signal de réponse (S2) est reçu par l'une première de ses antennes (3, 4, 5),
- une phase de communication au cours de laquelle l'unité de commande (7) communique avec le terminal mobile (30) en utilisant, au moins initialement, exclusivement ladite première antenne (3, 4, 5).

10. Procédé de communication selon la revendication précédente, dans lequel, au cours de la phase de communication :
- l'unité de commande (7) émet des requêtes de contrôle (S3) successives via chacune de ses antennes (3, 4, 5) autre que la première antenne, puis, lorsqu'un signal de réplique (S4) est reçu par l'une seconde de ses antennes (3, 4, 5),
- l'unité de commande (7) détermine le gain du signal de réponse instantané (S2') reçu du terminal mobile (30) via ladite première antenne (3, 4, 5),
- l'unité de commande (7) compare le gain du signal de réponse instantané (S2') et le gain du signal de réplique (S4), puis
- l'unité de commande (7) poursuit la communication avec le terminal mobile (30) via ladite seconde antenne uniquement si le gain du signal de réplique (S4) est sensiblement supérieur au gain du signal de réponse instantané (S2').

11. Procédé de communication selon l'une des revendications 9 et 10, appliqué à un véhicule automobile conforme à l'une des revendications 6 à 8, dans lequel, alors qu'en phase de communication l'unité de commande (7) d'un premier des équipements électroniques (1) communique avec le terminal mobile (30) via une première de ses antennes (3, 4, 5) :
- l'unité de commande (7) de chaque équipement électronique (1) émet des requêtes de contrôle (S3) successives via chacune de ses antennes (3, 4, 5) autre que la première antenne, puis, lorsqu'un signal de réplique (S4) est reçu par l'une seconde des antennes du second équipement électronique (1),
- l'unité de commande (7) du premier équipement électronique (1) détermine le gain du signal de réponse instantané (S2') reçu du terminal mobile (30) via ladite première antenne (3, 4, 5),
- l'unité de commande (7) de l'un au moins des équipements électroniques (1) compare le gain du signal de réponse instantané (S2') et le gain du signal de réplique (S4), puis
- l'unité de commande (7) du second équipement électronique (1) poursuit la communication avec le terminal mobile (30) via ladite seconde antenne uniquement si le gain du signal de réplique (S4) est sensiblement supérieur au gain du signal de réponse instantané (S2').

12. Procédé de communication selon l'une des revendications 10 et 11, dans lequel, au cours de la phase de communication, il est prévu une étape d'estimation de la position du terminal mobile (30), en fonction de quelle antenne (3, 4, 5) est utilisée et en fonction au moins du gain du signal de réponse instantané (S2').

13. Procédé de contrôle interactif du stationnement automatique d'un véhicule automobile (10) conforme à l'une des revendications 6 à 8 dans une place de stationnement au moyen d'un terminal mobile (30), ledit véhicule automobile (10) comportant:
- des moyens de commande de l'orientation des roues (13) du véhicule automobile (10),
- des moyens de contrôle d'un groupe motopropulseur (14) du véhicule automobile (10),
- au moins un moyen d'aide à la détection d'obstacles (25, 26), et
- un calculateur central (21) qui est adapté à piloter lesdits moyens de commande et de contrôle en fonction de données reçues du moyen d'aide à la détection d'obstacles (25, 26),
dans lequel il est prévu des étapes de :
- mise en communication du terminal mobile (30) avec le véhicule automobile (10) au moyen d'un procédé de communication conforme à l'une des revendications 9 à 12,
- sélection par l'utilisateur sur le terminal mobile (30) d'un mode de stationnement automatique du véhicule automobile (10), et de
- stationnement automatique du véhicule automobile (10), au cours de laquelle le calculateur (21) pilote lesdits moyens de commande et de contrôle en fonction de données reçues du moyen d'aide à la détection d'obstacles (25, 26).

## Patentansprüche

1. Elektronische Einparkhilfeeinrichtung (1) für ein Kraftfahrzeug (10), umfassend:
- ein Gehäuse (2), das eine Antenne (3) trägt,
- eine Kamera (6), die zumindest teilweise in dem Gehäuse (2) aufgenommen ist, und
- eine Steuerungseinheit (7), die in dem Gehäuse (2) aufgenommen ist und die an die Antenne (3) angeschlossen ist,
**dadurch gekennzeichnet, dass** das Gehäuse (2) mindestens eine weitere Antenne (4) trägt, die an die Steuerungseinheit (7) angeschlossen ist, und
dass die Steuerungseinheit (7) dazu eingerichtet ist, jede Antenne (3, 4) auszuwählen und Signale (S1, S2) ausschließlich über die ausgewählte Antenne zu senden und zu empfangen.

2. Elektronische Einrichtung (1) nach dem vorhergehenden Anspruch, bei der das Gehäuse (2) eine dritte Antenne (5) trägt, die an die Steuerungseinheit (7) derart angeschlossen ist, dass die Steuerungseinheit (7) sie auswählen kann, um Signale (S1, S2) zu senden und zu empfangen.

3. Elektronische Einrichtung (1) nach einem der vorhergehenden Ansprüche, bei der das Gehäuse (2) mehrere paarweise rechtwinklige Flächen (2A, 2B, 2C) aufweist und bei der die Antennen (3, 4, 5) jeweils an den rechtwinkligen Flächen (2A, 2B, 2C) gelegen sind.

4. Elektronische Einrichtung (1) nach einem der vorhergehenden Ansprüche, bei der drahtgebundene Anschlussmittel (8) zum Anschließen der Kamera (6) an ein erstes Kommunikationsnetz und der Steuerungseinheit (7) an ein zweites Kommunikationsnetz, das mit dem ersten Kommunikationsnetz identisch oder davon verschieden ist, vorgesehen sind.

5. Elektronische Einrichtung (1) nach einem der vorhergehenden Ansprüche, bei der jede Antenne (3, 4, 5) in Form eines geradlinigen Strahlungselements vorliegt.

6. Kraftfahrzeug (10) mit zwei Außenrückspiegeln (11) und einem zentralen Rechner (21), **dadurch gekennzeichnet, dass** es ferner zwei elektronische Einrichtungen (1) nach einem der vorhergehenden Ansprüche umfasst, die jeweils in den beiden Außenrückspiegeln (11) aufgenommen sind, und ein Kommunikationsnetz (12), das den zentralen Rechner (21) und die Steuerungseinheiten (7) der beiden elektronischen Einrichtungen (1) untereinander verbindet.

7. Kraftfahrzeug (10) nach dem vorhergehenden Anspruch, bei dem jeder Außenrückspiegel (11) neben der elektronischen Einrichtung (1) einen Spiegel oder eine Rückfahrkamera umfasst, die es ermöglichen, Bilder des Bereichs hinter dem Kraftfahrzeug (10) aufzunehmen.

8. Kraftfahrzeug (10) nach einem der beiden vorhergehenden Ansprüche, das mindestens eine weitere elektronische Einrichtung (1) nach einem der Ansprüche 1 bis 5 umfasst, die an der Vorderseite oder an der Rückseite des Fahrzeugs gelegen ist.

9. Verfahren zur Kommunikation einer elektronischen Einrichtung (1) nach einem der Ansprüche 1 bis 5 mit einem mobilen Endgerät (30), das zwei verschiedene Phasen umfasst, darunter:
- eine Wartephase, während der die Steuerungseinheit (7) der elektronischen Einrichtung (1) aufeinander folgende Kopplungsversuchsanforderungen (S1) abwechselnd über jede ihrer Antennen (3, 4, 5) sendet, an die sich, sobald ein Antwortsignal (S2) von einer ersten ihrer Antennen (3, 4, 5) empfangen wird, anschließt,
- eine Kommunikationsphase, während der die Steuerungseinheit (7) mit dem mobilen Endgerät (30) kommuniziert, wobei es, zumindest anfänglich, ausschließlich die erste Antenne (3, 4, 5) verwendet.

10. Kommunikationsverfahren nach dem vorhergehenden Anspruch, bei dem während der Kommunikationsphase:
- die Steuerungseinheit (7) aufeinander folgende Kontrollanforderungen (S3) über jede ihrer Antennen (3, 4, 5) außer der ersten Antenne sendet, dann, wenn ein Repliksignal (S4) von einer zweiten ihrer Antennen (3, 4, 5) empfangen wird,
- die Steuerungseinheit (7) die Verstärkung des aktuellen Antwortsignals (S2') bestimmt, das vom mobilen Endgerät (30) über die erste Antenne (3, 4, 5) empfangen wird,
- die Steuerungseinheit (7) die Verstärkung des aktuellen Antwortsignals (S2') und die Verstärkung des Repliksignals (S4) vergleicht, dann
- die Steuerungseinheit (7) die Kommunikation mit dem mobilen Endgerät (30) nur dann über die zweite Antenne fortsetzt, wenn die Verstärkung des Repliksignals (S4) wesentlich größer als die Verstärkung des aktuellen Antwortsignals (S2') ist.

11. Kommunikationsverfahren nach einem der Ansprüche 9 und 10, das auf ein Kraftfahrzeug nach einem der Ansprüche 6 bis 8 angewandt wird, bei dem, während in der Kommunikationsphase die Steuerungseinheit (7) einer ersten der elektronischen Einrichtungen (1) mit dem mobilen Endgerät (30) über eine erste ihrer Antennen (3, 4, 5) kommuniziert:
- die Steuerungseinheit (7) jeder elektronischen Einrichtung (1) aufeinander folgende Kontrollanforderungen (S3) über jede ihrer Antennen (3, 4, 5) außer der ersten Antenne sendet, dann, wenn ein Repliksignal (S4) von einer zweiten der Antennen der zweiten elektronischen Einrichtung (1) empfangen wird,
- die Steuerungseinheit (7) der ersten elektronischen Einrichtung (1) die Verstärkung des aktuellen Antwortsignals (S2') bestimmt, das vom mobilen Endgerät (30) über die erste Antenne (3, 4, 5) empfangen wird,
- die Steuerungseinheit (7) mindestens einer der elektronischen Einrichtungen (1) die Verstärkung des aktuellen Antwortsignals (S2') und die Verstärkung des Repliksignals (S4) vergleicht, dann
- die Steuerungseinheit (7) der zweiten elektronischen Einrichtung (1) die Kommunikation mit dem mobilen Endgerät (30) nur dann über die zweite Antenne fortsetzt, wenn die Verstärkung des Repliksignals (S4) wesentlich größer als die Verstärkung des aktuellen Antwortsignals (S2') ist.

12. Kommunikationsverfahren nach einem der Ansprüche 10 und 11, bei dem während der Kommunikationsphase ein Schritt des Schätzens der Position des mobilen Endgeräts (30) in Abhängigkeit davon, welche Antenne (3, 4, 5) verwendet wird, und in Abhängigkeit von mindestens der Verstärkung des aktuellen Antwortsignals (S2') vorgesehen ist.

13. Interaktives Kontrollverfahren zum automatisierten Einparken eines Kraftfahrzeugs (10) nach einem der Ansprüche 6 bis 8 auf einem Parkplatz mittels eines mobilen Endgeräts (30), wobei das Kraftfahrzeug (10) umfasst:
- Mittel zur Steuerung der Ausrichtung der Räder (13) des Kraftfahrzeugs (10),
- Mittel zur Kontrolle eines Antriebsaggregats (14) des Kraftfahrzeugs (10),
- mindestens ein Hilfsmittel zur Hindernisdetektion (25, 26) und
- einen zentralen Rechner (21), der dazu eingerichtet ist, die Steuerungs- und Kontrollmittel in Abhängigkeit von Daten, die vom Hilfsmittel zur Hindernisdetektion (25, 26) empfangen werden, anzusteuern,
bei dem die folgenden Schritte vorgesehen sind:
- Aufbauen der Kommunikation des mobilen Endgeräts (30) mit dem Kraftfahrzeug (10) mittels eines Kommunikationsverfahrens nach einem der Ansprüche 9 bis 12,
- Auswählen eines automatisierten Einparkmodus für das Kraftfahrzeug (10) auf dem mobilen Endgerät (30) durch den Nutzer und
- automatisiertes Einparken des Kraftfahrzeugs (10), während dessen der Rechner (21) die Steuerungs- und Kontrollmittel in Abhängigkeit von Daten, die vom Hilfsmittel zur Hindernisdetektion (25, 26) empfangen werden, ansteuert.

## Claims

1. Electronic parking assistance device (1) for a motor vehicle (10), comprising:
- a housing (2) which bears an antenna (3),
- a camera (6) which is housed at least partly in the housing (2), and
- a control unit (7) which is housed in the housing (2) and which is connected to said antenna (3),
**characterized in that** the housing (2) bears at least one other antenna (4) which is connected to the control unit (7) and
**in that** the control unit (7) is adapted to select each antenna (3, 4) and to transmit and receive signals (S1, S2) exclusively via the selected antenna.

2. Electronic device (1) according to the preceding claim, in which the housing (2) bears a third antenna (5) which is connected to the control unit (7) so that the control unit (7) can select it to transmit and receive signals (S1, S2).

3. Electronic device (1) according to either of the preceding claims, in which the housing (2) has several orthogonal faces (2A, 2B, 2C) in pairs and in which the antennas (3, 4, 5) are respectively situated on said orthogonal faces (2A, 2B, 2C).

4. Electronic device (1) according to one of the preceding claims, in which wired connection means (8) are provided from the camera (6) to a first communication network and from said control unit (7) to a second communication network, combined with or distinct from the first communication network.

5. Electronic device (1) according to one of the preceding claims, in which each antenna (3, 4, 5) takes the form of a rectilinear radiating strand.

6. Motor vehicle (10) comprising two external rear view mirrors (11) and a central computer (21), **characterized in that** it further comprises two electronic devices (1) according to one of the preceding claims, respectively housed in the two external rear view mirrors (11), and a communication network (12) which connects the central computer (21) and the control units (7) of the two electronic devices (1) to one another.

7. Motor vehicle (10) according to the preceding claim, in which each external rear view mirror (11) comprises, in addition to the electronic device (1), a mirror or a rear view camera making it possible to acquire images from the rear of the motor vehicle (10).

8. Motor vehicle (10) according to either of the preceding two claims, comprising at least one other electronic device (1) according to one of claims 1 to 5, situated at the front or at the rear of the vehicle.

9. Communication method from an electronic device (1) according to one of Claims 1 to 5 to a mobile terminal (30), comprising two distinct phases, namely:
- a waiting phase during which the control unit (7) of the electronic device (1) transmits successive association attempt requests (S1) via, alternately, each of its antennas (3, 4, 5), which is followed by, as soon as a response signal (S2) is received by a first of its antennas (3, 4, 5),
- a communication phase during which the control unit (7) communicates with the mobile terminal (30) by using, at least initially, exclusively said first antenna (3, 4, 5).

10. Communication method according to the preceding claim, in which, during the communication phase:
- the control unit (7) transmits successive control requests (S3) via each of its antennas (3, 4, 5) other than the first antenna, then, when a replica signal (S4) is received by a second of its antennas (3, 4, 5),
- the control unit (7) determines the gain of the instantaneous response signal (S2') received from the mobile terminal (30) via said first antenna (3, 4, 5),
- the control unit (7) compares the gain of the instantaneous response signal (S2') and the gain of the replica signal (S4), then
- the control unit (7) continues the communication with the mobile terminal (30) via said second antenna only if the gain of the replica signal (S4) is substantially greater than the gain of the instantaneous response signal (S2').

11. Communication method according to either of Claims 9 and 10, applied to a motor vehicle according to one of Claims 6 to 8, in which, while in the communication phase the control unit (7) of a first of the electronic devices (1) communicates with the mobile terminal (30) via a first of its antennas (3, 4, 5):
- the control unit (7) of each electronic device (1) transmits successive control requests (S3) via each of its antennas (3, 4, 5) other than the first antenna, then, when a replica signal (S4) is received by a second of the antennas of the second electronic device (1),
- the control unit (7) of the first electronic device (1) determines the gain of the instantaneous response signal (S2') received from the mobile terminal (30) via said first antenna (3, 4, 5),
- the control unit (7) of at least one of the electronic devices (1) compares the gain of the instantaneous response signal (S2') and the gain of the replica signal (S4), then
- the control unit (7) of the second electronic device (1) continues the communication with the mobile terminal (30) via said second antenna only if the gain of the replica signal (S4) is substantially greater than the gain of the instantaneous response signal (S2').

12. Communication method according to either of Claims 10 and 11, in which, during the communication phase, there is provided a step of estimation of the position of the mobile terminal (30), as a function of which antenna (3, 4, 5) is used and as a function at least of the gain of the instantaneous response signal (S2').

13. Method for interactive control of the automatic parking of a motor vehicle (10) according to one of Claims 6 to 8 in a parking space by means of a mobile terminal (30), said motor vehicle (10) comprising:
- means for commanding the orientation of the wheels (13) of the motor vehicle (10),
- means for controlling a power train (14) of the motor vehicle (10),
- at least one means for assisting in the detection of obstacles (25, 26), and
- a central computer (21) which is adapted to drive said command and control means as a function of data received from the obstacle detection assistance means (25, 26),
in which are provided steps of:
- connecting the mobile terminal (30) with the motor vehicle (10) by means of a communication method according to one of Claims 9 to 12,
- selection by the user on the mobile terminal (30) of an automatic parking mode of the motor vehicle (10), and of
- automatic parking of the motor vehicle (10), during which the computer (21) drives said command and control means as a function of data received from the obstacle detection assistance means (25, 26).
